Europäisches Patentamt

European Patent Office

Office européen des brevets

(19)

(11) Publication number: **0 065 499**
**B1**

(12) # EUROPEAN PATENT SPECIFICATION

(45) Date of publication of patent specification: **26.08.87**

(51) Int. Cl.⁴: **G 01 S 7/36**

(21) Application number: **82830123.4**

(22) Date of filing: **07.05.82**

(54) **Adaptive polarization for the cancellation of intentional interference in a radar system.**

(30) Priority: **11.05.81 IT 4843881**

(43) Date of publication of application:
**24.11.82 Bulletin 82/47**

(45) Publication of the grant of the patent:
**26.08.87 Bulletin 87/35**

(84) Designated Contracting States:
**DE FR GB NL SE**

(56) References cited:
**GB-A-1 504 517**
**GB-A-1 510 625**
**US-A-4 107 678**

(73) Proprietor: **SELENIA INDUSTRIE
ELETTRONICHE ASSOCIATE S.p.A.
Via Tiburtina, KM 12.400
I-00131 Roma (IT)**

(72) Inventor: **Giuli, Dino, DOTT.
Via Claudio Monteverdi, 15
I-00144 Firenze (IT)**

(74) Representative: **Gustorf, Gerhard, Dipl.-Ing.
Mühlenstrasse 1
D-8300 Landshut (DE)**

Courier Press, Leamington Spa, England.

## Description

The invention relates to an adaptive polarization receiver for the cancellation of intentional interference in a radar system, according to the opening part of claim 1.

In present radar systems, intentional interference acting on the radar equipment cannot be cancelled fully.

From GB—A—1 510 625, it is known to provide two different antenna signals which e.g. can be cross polarized and to feed the antenna signals to one adaptive filter. According to this publication, page 2, lines 99 to 109, the antenna has to be rotated to a favourable angular setting in case that the source of jamming or deceptive radiation or intentional interference will excite mainly one of the receiving channels and the true echo return in the other channel is weak. The presence of clutter may affect the function of such a construction.

It is a primary object of the present invention to overcome at least some of these disadvantages without incurring a substantive increase in expenditure.

According to the invention, this object is achieved by the features set forth in the characterizing clause of claim 1. Advantageous developments are recited in subclaims.

As to a specific advantage of the invention, not only the interference received on the side lobes, but also the interference received on the antenna main beam is attenuated. The receiver can be applied to radars both with mechanical scanning and with phased-array type antennas having a group of dipoles in phase. The implementation of the receiver requires that the antenna furnishes the receiver with two signals having crossed polarizations.

The performance of a radar can be considerably reduced by the reception of intentional interference signals. Nevertheless, the useful signal, i.e. the one reflected from a target of interest, can be discriminated from the one produced by intentional interference by exploiting its different characteristics of time, frequency and source direction.

The techniques developed in this field are well known, for example the coding of the transmitted pulses in time and frequency, the formation of nulls in the antenna radiation diagram in the directions of the sources of the interference. The radar technique which exploits adaptive polarization to increase the cancellation of atmospheric clutter is also well know.

For this purpose a device based on the use of a closed loop adaptive canceller was proposed (see F. E. Nathanson, "Adaptive Circular Polarization", IEEE Int. Radar Conference, Washington, 1975). This requires the use of circular polarization in transmission and the availability of two receiving channels with circular polarizations in opposite rotation. The canceller operates on the two received signals improving the degree of atmospheric clutter cancellation on the receiving channel polarized with the same direction of rotation as that employed in transmission. Thus the cancellation is effected on the channel that is intrinsically less disturbed by this type of clutter. The efficiency of the canceller with respect to atmospheric clutter is based on the determination of an elliptical polarization in reception, variable in time, and which even though little different from the circular polarization is better adapted to the state of polarization of the e.m. wave associated with this type of echo radar.

The new effected solution allows the use of an adaptive polarization receiver to cancel intentional interference. The device consists in the use of a pair of adaptive cancellers one on each of the two receiving channels with orthogonal polarization. Thus the channel affected with least interference is selected. The radar signal which is thus made available can be subjected to the usual radar techniques of filtering and detection. To guarantee an improvement in the performance also in terms of signal/interference ratio it is convenient to choose the antenna polarizations in such a way that the use of the adaptive cancellers does not produce an excessive reduction of the signal power. For this reason it is convenient to use circular, or 45° linear, polarization in transmission and the pair of horizontal and vertical polarizations in reception.

The principle of operation of each of the two cancellers inserted in the polarization diversity channels is identical to that of the canceller used to cancel atmospheric clutter.

The efficiency of the device is based on the capacity of each of the two cancellers, operating on the crossed-polarization channels, to modify the polarization of the corresponding receiving channel adapting it to the state of the e.m. wave polarizations generated by the jammer so as to minimize the sensitivity of the receiver with respect to the relative signal. It can be shown that in conditions of ideal operation the degree of cancellation which occurs on each of the two channels is identical.

Thus the use of the double canceller together with the selection of the least disturbed channel allows the realization of a degree of total cancellation equal to the degree of cancellation of a single canceller increased by the interference power ratio on the two channels.

In particular when the intentional interference comes from the side lobes of the antenna radiation pattern, it may frequently happen that the difference in power level of the interference signals on the two channels in noticeable. Under these condition, besides the advantage mentioned above, relative to the degree of cancellation obtainable the polarization of the preselected channel is little modified by the action of the canceller. This comes from the fact that the weighting of the canceller which operates on the lower power channel is much less than unity.

Thus under the assumed conditions the choice made for the polarization in transmission and for the polarization of the two receiving channels ensures that the power level of the echo signal coming from the target is not excessively degraded by the action of the cancellers or the effect of the selection performed on the two receiving channels.

Further advantages derive from the selection of the least disturbed channel considering the causes which limit the degree of cancellation obtainable. In fact, it is known that if the two available signals are considerably different in power, the best performance is obtained from the canceller that effects the cancellation on the least disturbed channel.

It is to be noted that the use of the adaptive filter for cancelling intentional interference is a new concept which for its efficient application requires the realization of a device, such as that described in this section, which is different from the simple adaptive polarization canceller proposed for the cancellaton of atmospheric clutter. This difference derives substantially from the fact that the jammer does not collaborate, so that the polarization of the interference can be very variable and therefore not predictable.

This situation contrasts with that of the interference due to atmospheric clutter in which the polarization that produces the best cancellation is not, however, much different from the circular polarization having the same direction of rotation as that employed in transmission.

The system which is the subject of this invention has the important faculty of being compatible with all the usual radar techniques of filtering, since it can be considered as a conventional radar receiver which presents a reduced sensitivity with regard to intentional interference. In particular the cancellation which this system achieves with respect to intentional interference is added with that achievable with the other techniques of cancellation already known.

With regard to the most diffuse technique, based on the reduction of the antenna gain in the directions of the sources of interference, the present technique offers the following advantages:

it is capable of cancelling interference coming even from the main lobe;

it is capable of cancelling interference coming from the side lobes even from directions far from the direction in which the antenna is pointing.

The present technique presents evident aspects which are complementary to the adaptive cancellation techniques based on the reduction of antenna gain in the directions of the sources of interference. Thus, the joint use of these techniques is particularly convenient for reducing the efficiency of the jammers.

The adaptive polarization receiver will now be described in more detail by means of the attached diagrams in which:

Fig. 1 shows a simplified diagram of a known device employing a closed loop adaptive canceller used to increase the cancellation of atmospheric clutter;

Fig. 2 show a simplified diagram of the adaptive polarization receiver device for the cancellation of intentional interference which is the subject of this invention;

Fig. 3 shows a block diagram of one of the two receiving channels with greater detail of the feedback parts i.e. the interference estimator; and

Fig. 4 shows the block diagram of the least disturbed receiving channel selector.

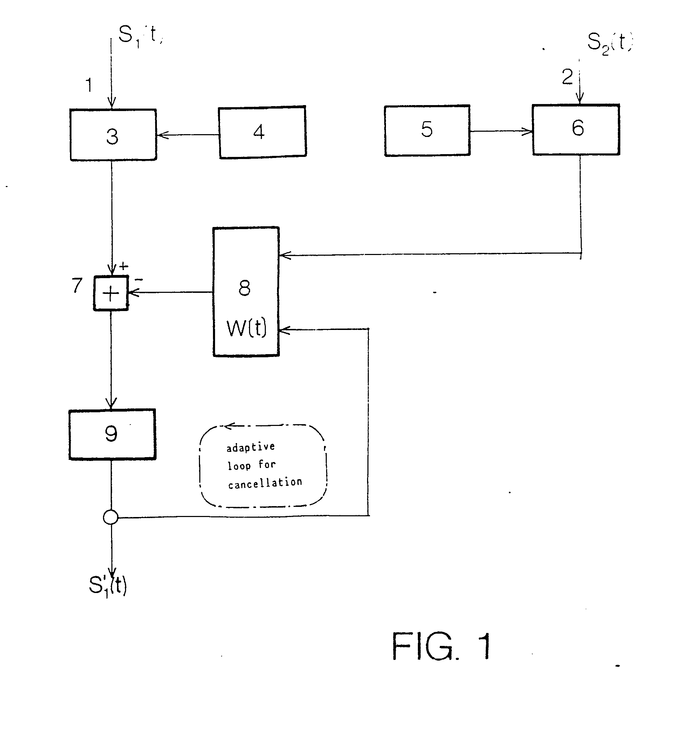

The diagram in Fig. 1 shows the device which realizes a closed loop adaptive canceller for the cancellation, for example, of atmospheric clutter. The signals $S_1(t)$ and $S_2(t)$ are the respective input signals to the receiving channels 1, 2 of the receivers. $S_1(t)$ has a circular polarization with the same direction of rotation as that employed in transmission and signal $S_2(t)$ on the other hand has the opposite direction. Mixers 3 and 6 controlled by the local oscillators 4 and 5 displace the signals in the frequency band most convenient for processing, while the band-pass filter 9 discriminates the useful signal.

Essentially the canceller extracts the signal $S_1'(t)$ (useful signal) linearly combining the signals $S_1(t)$ and $S_2(t)$ received through the polarization diversity channels.

$$S'(t) = S_1(t) - W(t) S_2(t) \qquad (1)$$

where "$W(t)$" is the combining coefficient of the two signals. To minimize the residual power of the interference, the coefficient $W(t)$ is chosen so that it is equal to the correlation coefficient between the signals $S_1(t)$ and $S_2(t)$. Thus the signal $W(t) S_2(t)$ represents an estimate of the interference present in channel 1. The coefficient $W(t)$ depends on the polarization and on the degree of coherence of the e.m. wave received. The maximum degree of cancellation achievable is determined by the above-mentioned degree of coherence; lower values of the degree of cancellation can result from phenomena of decorrelation of the signals introduced by the sensor and by the reception circuits.

The diagram is a classical one, also well known in other fields of radar techniques, utilized for the adaptive cancellation of interference signals, as for example in the adaptive MTI (Moving Targer Indicator) filtering and adaptive formation of receiving antenna diagram techniques.

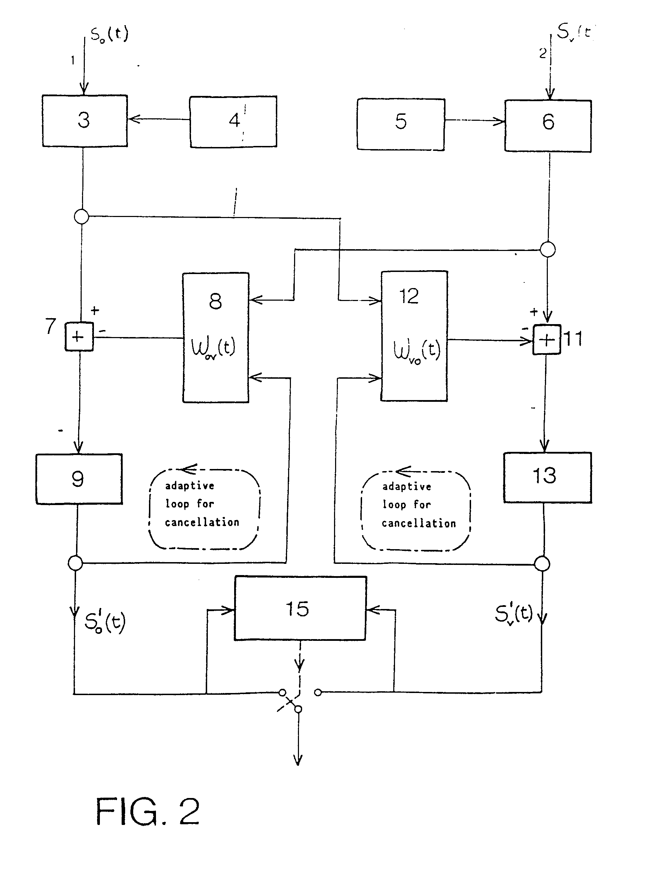

Fig. 2 illustrates schematically the circuit which realizes the present invention employing the coupling of two circuits similar to that described in Fig. 1.

In fact the signals obtained at the output of the two cancellers are given by the following linear combinations:

$$S_o'(t) = S_o(t) - W_{ov}(t) S_v(t) \qquad (2a)$$

$$S_v'(t) = S_v(t) - W_{vo}(t) S_o(t) \qquad (2b)$$

The signals $W_{ov}(t) S_v(t)$ and $W_{vo}(t) S_o(t)$ represent the estimate of the interference present in the horizontal and vertical polarization channels respectively. The block numbered 15 controls the selection logic of the least disturbed channel.

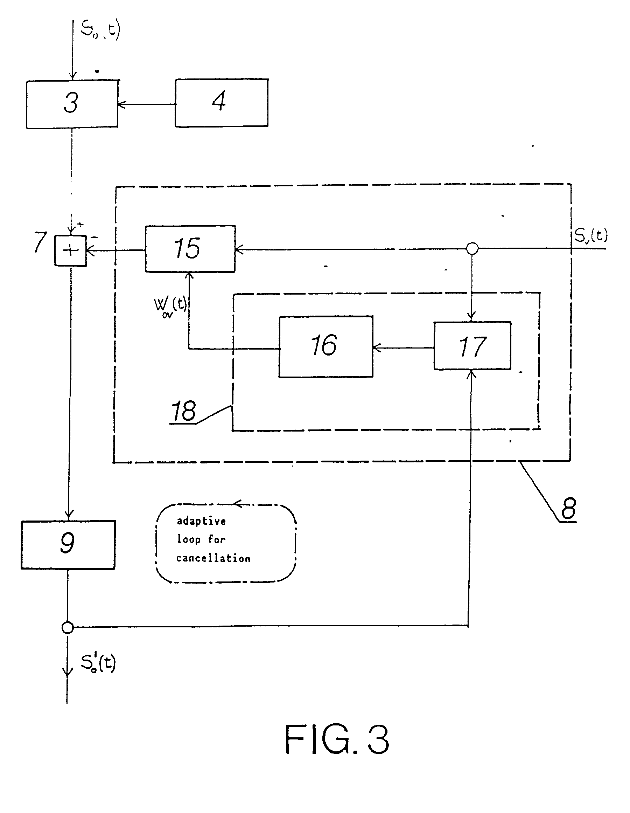

Fig. 3 is a detailed diagram of one of the two receiving channels (horizontal polarization). A completely analogous diagram applies to the other receiving channel (vertical polarization).

It may be noted that the signal processing is performed by analogue techniques nevertheless there are no limitations in principle to the use of digital techniques. The mixers 3, 6 and the oscillators 4 and 5 allow these signals to be set in the frequency band most suited to their processing as already illustrated.

The cancellation of the interference present in the horizontal polarization channel is performed by estimating the total of the interference by means of block 8 and substracting this estimate from signal "$S_o(t)$" by means of block 7 so as to obtain the cancelled signal "$S'_o(t)$".

Block 8 performs the product between the auxiliary (in this case "$S_v(t)$") and the coefficient of correlation between "$S'_o(t)$" and "$S_v(t)$". The coefficient of correlation "$W_{ov}(t)$" is available at the output of the correlator 18 and is obtained by muliplying the auxiliary signal "$S_v(t)$" by means of mixer 17, with the feed back signal "$S'_o(t)$" and then averaging this product in time with the narrow band filter 16. The time constant of this filter must be sufficiently shorter than the shortest period of variation of the polarization of the interference and much longer (10—20 times) than the time dimension of the radar resolution cell.

The "$W_{ov}(t)$" signal obtained at the output of the correlator 16 and 17 multiplied with signal "$S_v(t)$" by means of the mixer 15 finally furnishes an estimate of the interference level on channel "$S_o(t)$".

The estimate of the interference is performed in an adaptive mode by means of the loop shown in the figure to take into account that the polarization of the interference is not known and can vary in time.

The band-pass filter 9 is adapted to the useful signal to be detected i.e. to the echo coming from the target.

It filters the interference which generally has a power spectrum with a band wider than that of the radar receiver.

As indicated in Fig. 2 at the output of the system there is a device 15 for the selection of the least disturbed channel on which the successive operations are performed up to the detection of the useful signal.

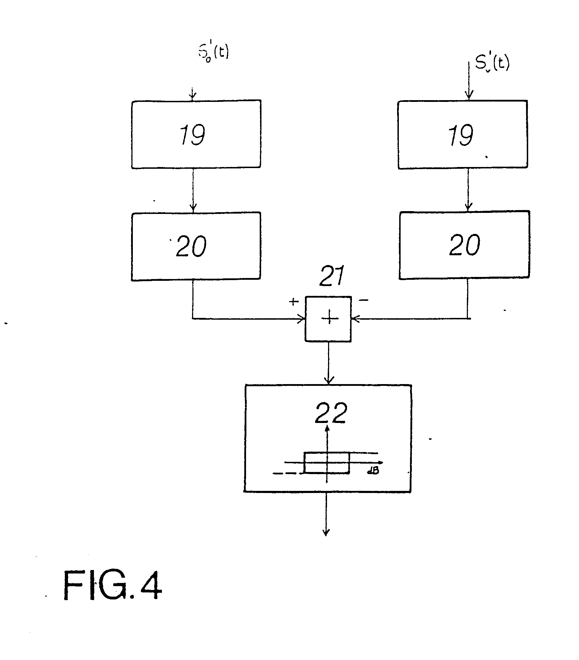

This device can be realized as shown in Fig. 4. The cancelled signals are amplified with a logarithmic amplifier 19 and subjected to band-pass filtering 20. The signals thus detected furnish an estimate of the interference power present in the channels on the basis of a logarithmic scale. The command signal for the selection of the receiving channel is obtained by subtracting the two signals obtained up to this point (21) and sending the resultant signal to a comparator with symmetrical hysteresis with respect to the origin 22. This type of comparator has the function of preventing a too frequent and arbitrary transition of the command signal caused by fluctuations of interference power on the two channels.

The hysteresis of the comparator has a limited amplitude (typically less than 3 dB). This amplitude is connected with the time constant of the low-pass filter which in its term depends on the dynamic behaviour of the interference.

**Claims**

1. Adaptive polarization receiver for the cancellation of intentional interference in a radar system having two receiving channels (1, 2) each of which processes one of two signals having different polarizations and being fed from a dual polarization antenna, one of the receiving channels comprising an adaptive filter (7—9) which performs the cancellation of the intentional interference, characterized in that the second of the two receiving channels is also formed by an adaptive filter (11—13) performing the cancellation of the intentional interference, each receiving channel using the signal received from the other channel as an auxiliary signal, that a switching device selects the processed signal at the output of said receiver from the least disturbed receiving channel by means of a device (15) fed by the interference cancelled signals and that said device (15) is formed by a logarithmic amplifier (19) and a low-pass filter (20) in each of the two channels, a subtractor (21) of the two amplified and filtered signals and a symmetrical hysteresis comparator (22) which furnishes the receiving channel selection command.

2. Receiver according to claim 1, characterized in that said two signals fed from said double polarization antenna correspond to waves with vertical and horizontal polarizations, i.e. with crossed orthogonal polarization, respectively.

3. Receiver as in claim 1, characterized in that the input signal at each of the said receiving channels is processed by a mixer (3), to which is connected a local oscillator (4), which allows the displacing of the input signal into a desired frequency band, and a subtractor (7) for substracting an auxiliary signal from the said signal, the resultant signal being then filtered via a band-pass filter (9) which furnishes at the output the useful signal without the intentional interference, said auxiliary signal substracted from the input signal being obtained from an interference estimating circuit (8).

4. Receiver as in claim 3 characterized in that said interference estimating circuit 8 of each of the two channels is formed by a mixer that mixes the signal received on the channel having the opposite polarization and the signal obtained by correlating the same channel output signal and the signal received on the channel having opposite polarization.

**Patentansprüche**

1. Empfänger mit adaptiver Polarisation zur Beseitigung von absichtlichen Störungen in einem Radar-system, mit zwei Empfangskanälen (1, 2), von denen jeder eines von zwei Signalen mit unterschiedlichen Polarisationen verarbeitet sowie von einer Doppelpolarisations-Antenne gespeist wird, wobei einer der Empfangskanäle ein adaptives Filter (7—9) enthält, das die Beseitigung der beabsichtigten Störung durchführt, dadurch gekennzeichnet, daß der zweite der beiden Empfangskanäle ebenfalls als adaptives Filter (11—13) ausgebildet ist, das die Beseitigung der beabsichtigten Störung durchführt, wobei jeder Empfangskanal das von dem anderen Kanal empfangene Signal als ein Hilfssignal verwendet, daß eine Schaltvorrichtung das verarbeitete Signal am Ausgang des Empfängers von dem am wenigsten Gestörten Empfangskanal mit Hilfe einer Einrichtung (15) auswählt, die von den von Störungen befreiten Signalen gespeist wird und daß die Einrichtung (15) gebildet wird durch einen logarithmischen Verstärker (19) und ein Tiefpassfilter (20) in jedem der zwei Kanäle, sowie durch einen Substrahierer (21) für die zwei verstärkten und gefilterten Signale und einen Vergleicher mit symmetrischer Hysterese (22), der den Empfangskanal-Auswahlbefehl liefert.

2 Empfänger nach Anspruch 1, dadurch gekennzeichnet, daß die zwei von der Doppelpolarisations-Antenne gelieferten Signale den Wellen mit vertikaler bzw. mit horizontaler Polarisation, d.h. mit gekreuzter orthogonaler Polarisation, entsprechen.

3. Empfänger nach Anspruch 1, dadurch gekennzeichnet, daß das Eingangssignal an jedem der Empfangskanäle von einem Mischer (3) verarbeitet wird, an den ein lokaler Oszillator (4) angeschlossen ist, der das Versetzen des Eingangssignals in ein gewünschtes Frequenzband gestattet, sowie ein Subtrahierer (7) zum Subtrahieren eines Hilfssignals von dem Signal angeschlossen ist, wobei das resultierende Signal dann über ein Bandpassfilter (9) gefiltert wird, welches am Ausgang das Nutzsignal ohne die beabsichtigte Störung liefert, und daß das von dem Eingangssignal subtrahierte Hilfssignal von einer Störungs-Abschätzschaltung (8) erhalten wird.

4. Empfänger nach Anspruch 3, dadurch gekennzeichnet, daß die Störungs-Abschätzschaltung (8) jedes der beiden Kanäle gebildet wird durch einen Mischer, der das an dem Kanal mit entgegengesetzter Polarisation empfangene Signal und das Signal mischt, welches dadurch erhalten wird, daß das Ausgangssignal desselben Kanals und das an dem Kanal mit umgekehrter Polarisation empfangene Signal korreliert werden.

## Revendications

1. Récepteur à polarisation adaptative pour l'élimination d'une interférence intentionnelle dans un système radar comprenant deux canaux récepteurs (1, 2), dont chacun traite l'un de deux signaux présentant des polarisations différentes et étant alimentés par une antenne à double polarisation, l'un des canaux récepteurs comprenant un filtre adaptatif (7—9) qui effectue l'élimination de l'interférence intentionnelle, caractérisé en ce que le second des deux canaux récepteurs est également constitué par un filtre adaptatif (11—13) effectuant l'élimination de l'interférence intentionnelle, chaque canal récepteur utilisant le signal reçu de l'autre canal comme signal auxiliaire, en ce qu'un dispositif de commutation sélectionne le signal traité à la sortie du récepteur à partir du canal de réception le moins perturbé au moyen d'un dispositif (15) alimenté par les signaux d'interférence éliminés, et en ce que ledit dispositif (15) est constitué par un amplificateur logarithmique (19) et un filtre passe-bas (20) dans chacun des deux canaux, un soustracteur (21) des deux signaux amplifiés et filtrés, et un comparateur d'hystérésis symétrique (22) qui fournit la commande de sélection du canal de réception.

2. Récepteur selon la revendication 1, caractérisé en ce que les deux signaux provenant de ladite antenne à double polarisation correspondent à des ondes de polarisation verticale et horizontale respectivement, c'est—à—dire de polarisation orthogonale croisée.

3. Récepteur selon la revendication 1, caractérisé en ce que le signal d'entrée de chacun des canaux de réception est traité par un mélangeur (3) auquel est relié un oscillateur local (4), qui permet le déplacement du signal d'entrée dans une bande de fréquences désirée, et un soustracteur (7) pour soustraire un signal auxiliaire dudit signal, le signal résultant étant alors filtré par un filtre passe-bande (9) qui fournit en sortie le signal utile sans l'interférence intentionnelle, ledit signal auxiliaire soustrait du signal d'entrée étant obtenu d'un circuit d'estimation d'interférence (8).

4. Récepteur selon la revendication 3, caractérisé en ce que ledit circuit d'estimation d'interférence (8) de chacun desdits canaux est formé par un mélangeur qui mélange le signal reçu sur le canal ayant la polarisation opposée et le signal obtenu par corrélation du signal de sortie du même canal et du signal reçu sur le canal de polarisation opposée.

FIG. 1

FIG. 2

FIG.3

FIG.4